(19) Europäisches Patentamt
European Patent Office
Office européen des brevets

(11) **EP 1 689 985 B1**

(12) **EUROPÄISCHE PATENTSCHRIFT**

(45) Veröffentlichungstag und Bekanntmachung des Hinweises auf die Patenterteilung:
**25.07.2007 Patentblatt 2007/30**

(21) Anmeldenummer: 04765344.9

(22) Anmeldetag: **17.09.2004**

(51) Int Cl.:
*F01N 3/28* (2006.01)   *B01J 35/04* (2006.01)

(86) Internationale Anmeldenummer:
**PCT/EP2004/010451**

(87) Internationale Veröffentlichungsnummer:
**WO 2005/033484 (14.04.2005 Gazette 2005/15)**

(54) **VERFAHREN ZUR HERSTELLUNG EINES METALLISCHEN WABENKÖRPERS MIT EINER LAGENLÄNGENDIFFERENZ**

METHOD FOR THE PRODUCTION OF A METALLIC HONEYCOMB ELEMENT COMPRISING LAYERS WITH DIFFERENT LENGTHS

PROCEDE DE PRODUCTION D'UN CORPS EN NID D'ABEILLES METALLIQUE PRESENTANT UNE DIFFERENCE DE LONGUEUR DE COUCHES

(84) Benannte Vertragsstaaten:
**DE ES FR GB IT**

(30) Priorität: **02.10.2003 DE 10345910**

(43) Veröffentlichungstag der Anmeldung:
**16.08.2006 Patentblatt 2006/33**

(73) Patentinhaber: **Emitec Gesellschaft für Emissionstechnologie mbH**
**53797 Lohmar (DE)**

(72) Erfinder:
• **BRÜCK, Rolf**
**51429 Bergisch Gladbach (DE)**
• **ALTHÖFER, Kait**
**51674 Wiehl (DE)**
• **HODGSON, Jan**
**53840 Troisdorf (DE)**
• **MÜLLER, Wilfried**
**51789 Lindlar (DE)**

(74) Vertreter: **Kahlhöfer, Hermann**
**Kahlhöfer Neumann Herzog Fiesser**
**Patentanwälte**
**Karlstrasse 76**
**D-40210 Düsseldorf (DE)**

(56) Entgegenhaltungen:
EP-A- 0 245 737       DE-A- 4 243 079
DE-A- 19 905 525       US-B1- 6 403 039

• **PATENT ABSTRACTS OF JAPAN Bd. 0130, Nr. 42 (C-564), 30. Januar 1989 (1989-01-30) & JP 63 240952 A (TOYOTA MOTOR CORP), 6. Oktober 1988 (1988-10-06)**

**Beschreibung**

Die Erfindung betrifft ein Verfahren zur Herstellung eines metallischen Wabenkörpers, der eine Mehrzahl von glatten Blechfolien sowie zumindest teilweise strukturierten Blechfolien aufweist und in einem Gehäuse angeordnet ist. Dabei haben die glatten Blechfolien eine erste Länge und die strukturierten Blechfolien eine zweite Länge.

Derartige metallische Wabenkörper werden insbesondere als Trägerkörper für eine katalytisch aktive, eine adsorbierende, eine oxidierende, eine reduzierende oder eine ähnlich wirkende Beschichtung in Abgasanlagen mobiler Verbrennungskraftmaschinen eingesetzt. Aufgrund der dort herrschenden, extremen thermischen und dynamischen Belastungen ist es von besonderer Bedeutung, eine dauerhafte Verbindung zwischen den Blechfolien untereinander bzw. auch zwischen den Blechfolien und dem Gehäuse zu gewährleisten. Üblicherweise werden die Blechfolien miteinander sowie mit dem Gehäuse fügetechnisch verbunden, insbesondere durch Sintern, Löten und/oder Schweißen. Hierzu ist es erforderlich, dass an den gewünschten Verbindungsstellen ausreichend Kontaktstellen zwischen den benachbarten Blechfolien bzw. den Blechfolien und dem Gehäuse gewährleistet sind, die als Basis für eine fügetechnische Verbindung dienen.

Zur Gewährleistung einer stabilen Verbindung der Blechfolien mit dem Gehäuse geht aus der EP 0 245 737 B1 hervor, dass durch die Verkürzung der gewellten Blechlagen gegenüber den glatten Blechlagen um einen vorgegebenen Abstand erreicht wird, dass alle Enden der Blechlagen das Mantelrohr berühren und sich daran anschmiegen. Aufgrund dieses Anschmiegens ist eine feste Verbindung zum Mantelrohr bei verschiedenen Berührungswinkeln leichter zu bewerkstelligen.

Es ist nunmehr Aufgabe der vorliegenden Erfindung, ein Verfahren anzugeben, das zur Herstellung dauerhaft einsetzbarer metallischer Wabenkörper dient. Insbesondere soll dabei die Lagenlängendifferenz für unterschiedliche Querschnittsformen des Wabenkörpers bzw. unterschiedlicher Ausgestaltungen sicher bestimmbar sein.

Diese Aufgaben werden gelöst durch ein Verfahren mit den Merkmalen des Patentanspruchs 1. Weitere vorteilhafte Ausgestaltungen des Verfahrens sind in den abhängigen Patentansprüchen beschrieben. An dieser Stelle ist darauf hinzuweisen, dass die in den abhängigen Patentansprüchen offenbarten technischen Merkmale in beliebiger, technologisch sinnvoller, Weise miteinander kombiniert werden können, wobei dies auch unabhängig von deren Bezugnahme zueinander erfolgen kann.

Das erfindungsgemäße Verfahren zur Herstellung eines metallischen Wabenkörpers, der eine Mehrzahl von glatten Blechfolien und zumindest teilweise strukturierten Blechfolien aufweist und in einem Gehäuse angeordnet ist, wobei die glatten Blechfolien eine erste Länge und die strukturierten Blechfolien eine zweite Länge haben, zeichnet sich dadurch aus, dass eine Differenz der ersten Länge und der zweiten Länge in Abhängigkeit einer Vorspannung gewählt wird.

Zur Erläuterung sei hier vorgetragen, dass die Blechfolien üblicherweise so gewickelt oder gewunden werden, dass sie eine äußere Form aufweisen, die im wesentlichen der Gestalt des Gehäuses entspricht. Der so vorgeformte Körper der Blechfolien wird in das Mantelrohr eingeführt und hat dabei wieder das Bestreben, sich aufzuweiten. Dadurch werden die Enden der Blechfolien gegen eine innere Mantelfläche des Gehäuses gedrückt.

Hier wird nun vorgeschlagen, dass die äußere Form des Blechfolien-Stapels einen Querschnitt aufweist, der bezogen auf seine Fläche um einen gewissen Anteil größer ist, als die von der Innenmantelfläche des Gehäuses begrenzte Querschnittsfläche des Gehäuses. Das bedeutet, dass es nicht möglich ist, den Blechfolien-Stapel in innere Bereiche des Gehäuses einzuführen, ohne dass der Blechfolien-Stapel mit der Innenmantelfläche des Gehäuses in Kontakt ist. Der flächenmäßige Überschuss liegt bevorzugt in einem Bereich von kleiner 10 %, insbesondere in einem Bereich von 2 bis 8 %. Dies hat zur Folge, dass beim Einführen des Blechfolien-Stapels in das Gehäuse über den Umfang eine Kraft bzw. ein Druck ausgeübt wird, der hier mit "Vorspannung" bezeichnet ist. Als Maß für die Vorspannung ist in diesem Zusammenhang der Flächenüberschuss als charakteristischer Kennwert geeignet. Demnach wird im folgenden unter einer Vorspannung von beispielsweise 5 % verstanden, dass der Querschnitt des Blechfolien-Stapels flächenmäßig um 5 % größer ist, als der Querschnitt des Gehäuses, der durch dessen Innenmantelfläche begrenzt wird.

Die Vorspannung ist in Abhängigkeit des Einsatzgebietes des Wabenkörpers auszuwählen. Weiterhin sind unter Umständen zu berücksichtigen, welche Gestalt das Gehäuse hat oder wie viele bzw. welche Art von Blechfolien eingesetzt werden. Ist nun die Vorspannung bestimmt, so wird hier vorgeschlagen, dass die Lagenlängendifferenz bzw. die Differenz der ersten Länge und der zweiten Länge in Abhängigkeit dieser Vorspannung gewählt wird. Diese Abhängigkeit kann linearer oder nicht-linearer Art sein. Hierzu wird im folgenden noch Näheres erläutert.

Gemäß einer weiteren Ausgestaltung des Verfahrens wird vorgeschlagen, dass bei der Bestimmung der Differenz der ersten Länge und der zweiten Länge zumindest einer der folgenden Parameter berücksichtigt wird:

- Dicke der Blechfolien;
- Material der Blechfolien;
- Höhe der strukturierten Blechfolien;
- Flankensteigung der strukturierten Blechfolien;

- Breite der Struktur der strukturierten Blechfolien;
- Verhältnis von Breite und Höhe der Struktur der strukturierten Blechfolien;
- Zelldichte;
- Oberflächenreibwerte der Blechfolien;
- Durchmesser des Wabenkörpers.

Die Dicke und/oder das Material der Blechfolien sind zu berücksichtigen, da sie maßgeblich das Verformungsverhalten der Blechfolien beeinflussen. Werden dickere Blechfolien eingesetzt, so ist üblicherweise mit einer geringeren Verformung beim Einführen der Blechfolien zu rechnen. Gleiches ist mit Rücksicht auf das Material festzustellen. Treten geringere Verformungen der Blechfolien auf, muss die Lagenlängendifferenz nicht so groß ausfallen. Die Höhe, die Flankensteigung, die Breite und/oder auch das Verhältnis von Breite und Höhe der Struktur haben ebenfalls erheblichen Einfluss auf die Steifigkeit des metallischen Wabenkörpers. Relativ flache Strukturen lassen sich leichter zusammendrücken, so dass in diesem Fall mit einer zunehmenden Verlängerung der strukturierten Blechfolie beim Einführen des Blechfolien-Stapels in das Mantelrohrs zu rechnen ist. Demnach sind auch die Lagenlängendifferenzen größer zu wählen. Die Zelldichte hat sich in Versuchen ebenfalls als relevante Größe herausgestellt, tendieren doch höhere Zelldichten zu einer größeren Lagenlängendifferenz. Aufgrund der Tatsache, dass die benachbart zueinander angeordneten Blechfolien beim Einführen in das Gehäuse aufeinander gleiten, sind die herrschenden Oberflächenreibwerte der Blechfolien ebenfalls von Bedeutung. Ein niedriger Oberflächenreibwert hat zur Folge, dass die Blechfolien leichter aufeinander abgleiten und eine größere Lagenlängendifferenz gewährleistet werden muss.

Außerdem wird auch vorgeschlagen, dass bei der Bestimmung der Differenz der ersten Lage und der zweiten Lage ein Korrekturwert berücksichtigt wird. Dieser Korrekturwert stellt beispielsweise ein Toleranzband dar, welches insbesondere im Hinblick auf die Serienfertigung solcher metallischer Wabenkörper von Bedeutung ist. Der Korrekturwert liegt bevorzugt in einem Bereich kleiner 1,3 mm und kann zu der bestimmten Lagenlängendifferenz hinzuaddiert oder abgezogen werden.

Ganz besonders vorteilhaft ist ein Verfahren, bei dem die Differenz ($\Delta$1) der ersten Länge und der zweiten Länge nach folgender Formel bestimmt wird:

$$\Delta l = \frac{Z_H}{Z_G}\left[\frac{m_1 l_0}{p}\left(h_0 - m_3 \sigma_v\right) + b_1\right] + \frac{Z_W}{Z_G}\left[\frac{m_2 l_0}{p}\left(h_0 - m_2 \sigma_v\right) + b_2\right]$$

wobei

| | |
|---|---|
| $Z_H$ = | Anteil "harter" Zellverbindungen |
| $Z_W$ = | Anteil "weicher" Zellverbindungen |
| $Z_G$ = | Gesamtzellzahl |
| $l_0$ = | Paketlänge (entspannt) in mm |
| $h_0$ = | Pakethöhe (entspannt) in mm |
| $p$ = | Pitch in mm |
| $\sigma_v$ = | Vorspannung |
| $m_i \, \sigma_v$ = | Wellhöheverringerung aufgrund der Vorspannung ist. |

Unter "hartenr" Zellverbindungen bzw. "weichen" Zellverbindungen sind zwei unterschiedliche Verhalten der strukturierten Blechlagen bzw. der glatten Blechlagen zu verstehen. Bei harten Zellverbindungen sind die Zellverbindungen gemeint, die während des Einsetzens zueinander ihre Lage nicht verändern. Das bedeutet, dass die beispielsweise direkt in Berührung stehenden Teilbereiche benachbarter glatter und strukturierter Blechfolien nach dem Einsetzen ihrer Relativlage zueinander nicht verändert haben. Im Gegensatz dazu werden mit "weichen" Zellverbindungen die Kontaktstellen beschrieben, die aufeinander abgleiten und somit ihre Relativlage zueinander verändern. Wie groß der Anteil von "harten" und "weichen" Zellverbindungen ist, hängt im wesentlichen von dem Wickeltyp (Spiralform, S-Form, etc.) und der Zellform selbst ab. Unter Paketlänge wird die mittlere Länge des Blechfolien-Stapels verstanden, die Pakethöhe stellt die Gesamthöhe des bzw. der Blechfolien-Stapel im entspannten Zustand dar. Mit einem Pitch ist die Breite der Struktur gemeint. Die Vorspannung liegt bevorzugt im Bereich von 4 bis 8 %.

Ausgehend von diesen Zusammenhängen lassen sich die folgenden Tendenzen bei der Variierung der Parameter im Hinblick auf die Lagenlängendifferenz anstellen. In den nachfolgenden Tabellen bedeuten ein Pfeil nach oben eine Vergrößerung/Erhöhung des Wertes und eine Pfeil nach unten eine Verkleinerung/Erniedrigung des Wertes.

Tab. 1: Tendenzielle Vergrößerung der Lagenlängendifferenz

| Parameter | | Lagenlängendifferenz |
|---|---|---|
| Anteil harter Verbindungen | ↑ | ↑ |
| Zelldichte | ↑ | ↑ |
| Vorspannung | ↑ | ↑ |
| Wickeltyp | ↑ | ↑ |
| Gleitfähigkeit | ↑ | ↑ |
| Wabenkörperdurchmesser | ↑ | ↑ |

Tab. 2: Tendenzielle Verkleinerung der Lagenlängendifferenz

| Parameter | | Lagenlängendifferenz |
|---|---|---|
| Anteil weicher Verbindungen | ↑ | ↓ |
| Pitch-Wellhöhen-Verhältnis | ↑ | ↓ |
| Folienstärke | ↑ | ↓ |

Gemäß noch einer weiteren Ausgestaltung des Verfahrens wird auch der Aufbau des Wabenkörpers berücksichtigt, insbesondere wenigstens einer der folgenden Kennwerte: Wickeltyp, Gehäusequerschnitt, Zellgeometrie. Unter "Wickeltyp" wird Bezug genommen auf den Verlauf der Blechfolien bei einer stirnseitigen Ansicht des Blechfolien-Stapels bzw. des Wabenkörpers. Bekannte Wickeltypen sind beispielsweise die Spiralform, die S-Form, die V-Form und die W-Form. Im Hinblick auf den Gehäusequerschnitt sind nahezu alle erdenklichen bekannt, insbesondere runde, ovale, polygonale, dreieckige oder Mischformen davon. Bei der Zellgeometrie wird im wesentlichen auf den Kanalquerschnitt abgestellt, wobei hier dreieckige, sinusförmige, rechteckige, runde oder ähnliche Zellgeometrien bekannt sind.

Gemäß noch einer weiteren Ausgestaltung wird vorgeschlagen, dass das Verfahren zumindest folgende Schritte umfasst:

- Bestimmen der Differenz der ersten Länge und der zweiten Länge;
- Auswahl von glatten Blechfolien mit der ersten Länge und von zumindest teilweise strukturierten Blechfolien mit der zweiten Länge;
- Stapel von glatten Blechfolien und strukturierten Blechfolien in abwechselnder Weise zu mindestens einem Stapel;
- Winden und/oder Wickeln des mindestens einen Stapels;
- Einbringen des mindestens einen Stapels mit einer Vorspannung in ein Gehäuse, so dass alle Enden der glatten und strukturierten Blechfolien mit dem Gehäuse in Kontakt sind.

Dieses Verfahren wird nachfolgend auch mit Bezug auf die Figuren näher erläutert. An dieser Stelle sei jedoch bereits darauf hingewiesen, dass sich das Verfahren insbesondere auf die Herstellung eines Wabenkörpers bezieht, welches keine Spiralform aufweisen. Bei der Spiralform liegt stets ein gewelltes oder ein glattes Blech nahezu vollständig und über den gesamten Umfang an der Innenmantelfläche des Gehäuses an. In diesem Fall ist es nicht so wichtig, dass das Ende der Blechfolie anliegt, da andere, großflächige Bereiche der Blechfolie an dem Gehäuse anliegen. Bei der Ausgestaltung eines Wabenkörpers mit einer Vielzahl von Blechen, wobei jedes dieser Bleche mit deren Enden an der Innenmantelfläche des Gehäuses anliegt, sind die Kontaktstellen bzw. die Berührstellen der Blechfolien hin zum Gehäuse deutlich kleiner. Um dennoch zu gewährleisten, dass eine dauerhafte Verbindung der Blechfolien mit dem Gehäuse gegeben ist, ist die Lagenlängendifferenz so zu wählen, dass wirklich alle Enden anliegen. Unter einem Ende ist insbesondere der letzte Abschnitt einer Blechfolie zu verstehen, der sich beispielsweise über eine Länge kleiner 2 oder 1 mm erstreckt, ggf. aber auch nur über wenige Zehntel Millimeter.

Deshalb wird bevorzugt vorgeschlagen, dass der mindestens eine Stapel S-formig, V-förmig und/oder U-förmig gebogen wird.

Gerade auch im Hinblick auf eine V-förmige oder U-förmige Anordnung der Blechfolien in dem Stapel ist es vorteilhaft, wenn mehrere Stapel in das Gehäuse eingebracht werden. Die anderen Stapel werden bevorzugt nebeneinander positioniert und dann gleichzeitig in das Gehäuse eingebracht.

Außerdem wird auch vorgeschlagen, dass über eine Stirnseite des Wabekörpers ein Haftmittel aufgebracht wird, welches sich infolge eines Kapillareffektes entlang von Kontaktstellen der Blechfolien miteinander sowie mit dem Gehäuse verteilt. Das Haftmittel verteilt sich dabei bevorzugt wirklich nur nahe der Kontaktstellen, also beispielsweise den Zwickeln, die zwischen den benachbart zueinander angeordneten Blechlagen und/oder die zwischen den Enden der Blechfolien und dem Gehäuse gebildet sind. Das Haftmittel hat z.B. auch die Funktion, nachträglich zugeführtes Lotmittel bis zur Ausbildung von fügetechnischen Verbindungen an den Kontaktstellen zu fixieren. Das Haftmittel ist dabei bevorzugt so gewählt, dass dieses bei einer thermischen Behandlung des Wabenkörpers in gasförmige Bestandteile umgewandelt wird und somit die Ausbildung von beispielsweise Lotverbindungen nicht behindert.

Außerdem wird vorgeschlagen, dass über eine Stirnseite des Wabenkörpers ein Lotmittel aufgebracht und der Wabenkörper bei Temperaturen von 1000° C bis 1300° C und/oder unter Vakuum verlötet wird. Bevorzugt kommt dabei ein pulverförmiges Lotmittel zum Einsatz, welches über die Stirnseite zugeführt wird und bevorzugt an einem Haftmittel haften bleibt. Die Art des Lotmittels ist mit Berücksichtigung des eingesetzten Materials der Blechfolien auszuwählen.

Gemäß einer weiteren Ausgestaltung des Verfahrens wird vorgeschlagen, die Blechfolie mit einer Trägerschicht zu versehen, welche mit einem katalytisch aktiven Material imprägniert und anschließend kalziniert wird. Als derartige Trägerschicht bietet sich insbesondere sogenannter Washcoat an. Diese Trägerschicht zeichnet sich durch eine besonders raue Oberfläche aus, die dabei so zerklüftet ist, dass ein inniger Kontakt mit beispielsweise Abgasen gewährleistet ist. Außerdem bietet die Großoberflächenbleche ausreichend Platz, um gleichmäßig katalytisch aktive Materialien vorzusehen, die eine Umsetzung von im Abgas enthaltenen Schadstoffen begünstigen.

Die Erfindung wird nachfolgend anhand der Figuren näher erläutert. Dabei sei darauf hingewiesen, dass die Figuren lediglich besonders bevorzugte Ausführungsformen betreffen, die Erfindung jedoch nicht darauf begrenzt ist.

Es zeigen:

Fig. 1: eine stirnseitige Ansicht eines Wabenkörpers;
Fig.2: schematisch das Verhalten eines Wabenkörpers unter Vorspannung;
Fig. 3: eine Detailansicht eines Wabenkörpers im Randbereich;
Fig. 4: eine Detailansicht eines Wabenkörpers mit Beschichtung;
Fig. 5: eine weitere Ausführungsform des Wabenkörpers;
Fig. 6: noch eine weitere Ausgestaltung eines Wabenkörpers; und
Fig. 7: schematisch den Ablauf eines Verfahrens zur Herstellung eines Wabenkörpers.

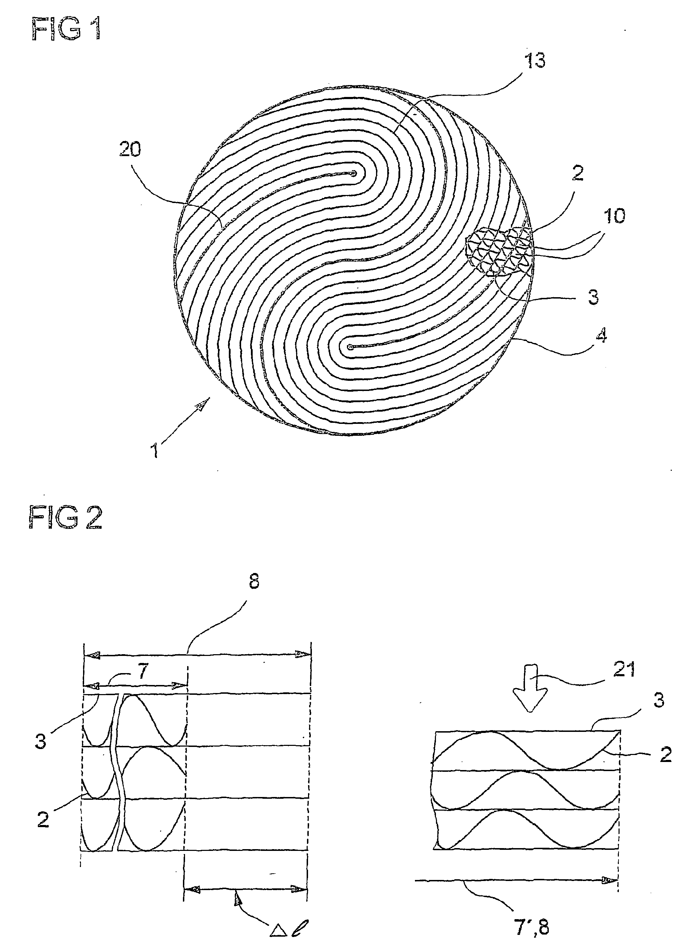

Fig.1 zeigt in einer stirnseitigen Ansicht einen Wabenkörper 1, der eine Mehrzahl von glatten Blechfolien 3 und zumindest teilweise strukturierten Blechfolien 2 aufweist und in einem Gehäuse 4 angeordnet ist. Die glatten Blechfolien 3 und die strukturierten Blechfolien 2 bilden Kanäle 10, die sich zwischen den beiden Stirnseiten 13 nahezu parallel zueinander erstrecken. Zur Erhöhung der Stabilität des dargestellten Wabenlcörpers 1 sind Verstärkungsstrukturen 20 vorgesehen.

Fig. 2 zeigt schematisch das Verhalten eines Blechfolien-Stapels mit glatten Blechfolien 3 und strukturierten Blechfolien 2 unter Vorspannung 21. Die glatten Blechfolien 3 haben eine erste Länge 8 und die strukturierten Blechfolien 2 eine zweite Länge 7. Die Differenz ($\Delta 1$) der ersten Länge 8 und der zweiten Länge 7 wird in Abhängigkeit von der Vorspannung 21 gewählt. Die Differenz der ersten Länge 8 und der zweiten Länge 7 beträgt vorzugsweise kleiner 5 mm (insbesondere im Bereich von 1 bis 3 mm), wobei unter Umständen auch die zweite Länge 7 größer sein kann als die erste Länge 8. In der rechten Darstellung erkennt man, dass bei Aufbringen einer Vorspannung 21 zumindest eine Veränderung der zweiten Länge 7 stattfindet, da die Struktur plattgedrückt wird. Gleichzeitig ist es aber auch möglich, dass die ursprünglich glatten Blechfolien 3 sich an eine Struktur der strukturierten Blechfolien 2 angleichen und somit ebenfalls ihre erste Länge 8 verändern. Letztendlich ist aber die Differenz der ersten Länge 8 und der zweiten Länge 7 so bemessen, dass bei Aufbringen der Vorspannung 21 alle Enden 17 am Gehäuse 4 anliegen.

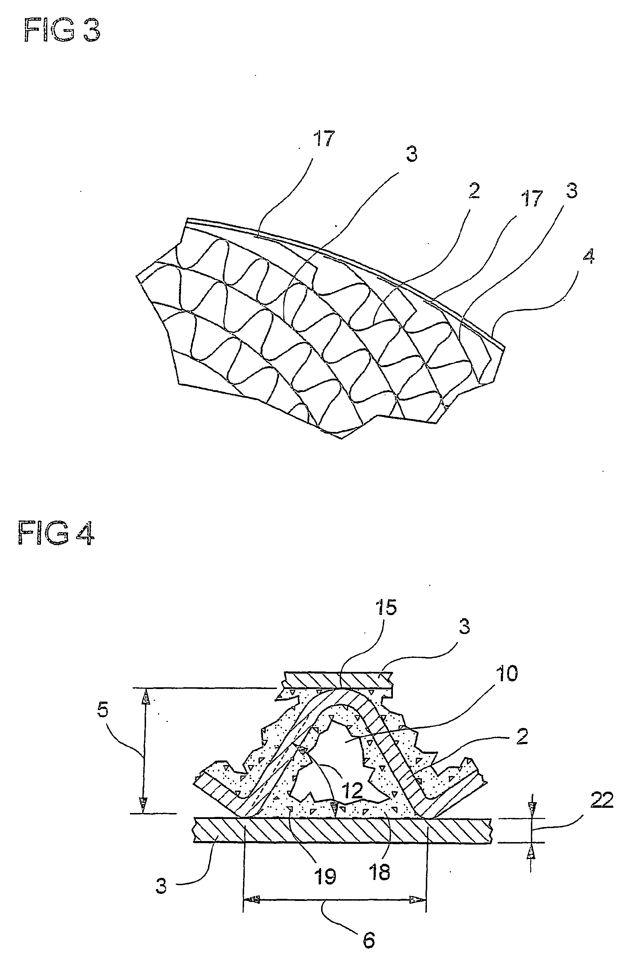

Fig. 3 zeigt schematisch und in einer Detailansicht genau dieses Anliegen der Enden 17 der glatten Blechfolien 3 und strukturierten Blechfolien 2 am Gehäuse 4.

Fig. 4 zeigt in einer Detailansicht einen Kanal 10, der durch glatte Blechfolien 3 und gewellte Blechfolien 2 gebildet ist. Die Struktur, die den Kanal 10 zumindest teilweise bildet, ist durch eine Höhe 5 und eine Breite 6 gekennzeichnet. Der Winkel, der durch eine Flanke der Struktur der strukturierten Blechfolie 2 und der glatten Blechfolie 3 gebildet wird, charakterisiert die Flankensteigung 12. Die Blechfolien 2, 3 weisen eine Dicke 22 auf, die bevorzugt kleiner 50 $\mu$m beträgt. Grundsätzlich ist es möglich, dass die strukturierten Blechfolien 2 und die glatten Blechfolien 3 unterschiedliche Dicken 22 aufweisen. Die Blechfolien 2, 3 sind über Kontaktstellen 15 miteinander verbunden. Bei der hier dargestellten Ausführungsform dient der Wabenkörper 1 als Trägerkörper für eine katalytisch aktive Beschichtung. Diese Beschichtung umfasst eine Trägerschicht 18, üblicherweise Washcoat, die mit einem Katalysator 19 dotiert ist. Beim Hindurchströmen eines Abgases durch den Kanal 10 erfolgt ein intensiver Kontakt mit der katalytisch aktiven Beschichtung und somit wird eine katalytisch motivierte Umwandlung von im Abgas enthaltenen Schadstoffen bewirkt.

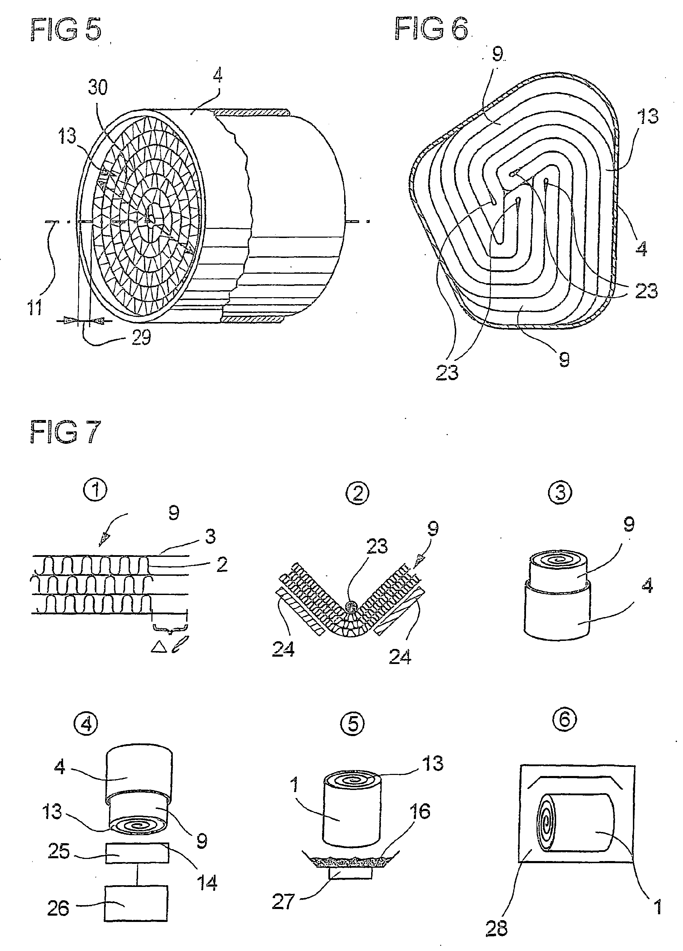

Fig. 5 zeigt eine weitere Wickelform eines Wabenkörpers 1. Die Blechfolien 2, 3 sind hierbei spiralförmig aufgewickelt um eine Achse 11 und in ein Gehäuse 4 eingeschoben. Dabei steht das Gehäuse 4 mit einem Vorsprung 11 hervor. Die Kanäle 10 erstrecken sich wiederum im wesentlichen parallel zur Achse 11 durch den Wabenkörper 1 hindurch von einer Stirnseite 13 zur gegenüberliegenden. Der Wabenkörper 1 weist dabei einen Durchmesser 30 auf, der bevorzugt im Bereich von 70 bis 130 mm liegt.

Fig. 6 zeigt ebenfalls einen Wabenkörper 1, der eine Mehrzahl von Stapeln 9 umfast, die im Inneren des Gehäuses 4 angeordnet sind. Die Stapel 9 sind dabei um mehrere Wickelpunkte 23 gewunden und in das Gehäuse 4 eingeführt worden.

Fig. 7 zeigt schematisch den Ablauf einer Ausgestaltung des erfindungsgemäßen Verfahrens. Nach dem Schritt 1 werden glatte Blechfolien 3 und strukturierte Blechfolien 2 abwechselnd zu einem Stapel 9 geschichtet. Dabei weisen die glatten Blechfolien 3 eine erste Länge 8 und die strukturierten Blechfolien 2 eine zweite Länge 7 auf, der so gebildete Stapel 9 wird nun um einen Wickelpunkt 23 mit Hilfe eines Werkzeugs 24 gebogen (Schritt 2). Einer bzw. mehrere solcher Stapel 9 werden im dritten Schritt nun zumindest teilweise in ein Gehäuse 4 eingeführt. Bei der in Schritt 4 dargestellten Variante wurde der Stapel 9 nicht vollständig in das Gehäuse 4 eingeführt, sondern die freiliegende Stirnfläche wurde mit einem Verteiler 25 für ein Haftmittel 14 in Kontakt gebracht. Infolge des Kapillareffektes wird das Haftmittel 14 aus einem Reservoir 26 über den Verteiler 25 in die Kanäle 10 des Wabenkörpers 1 bzw. des Stapels 9 hinaufgesaugt. Gemäß Schritt 5 wird der so vorbereitete Körper 1 in ein Wirbelbett 27 mit Lotmittel 16 getaucht. Das Lotmittel 16 dringt dabei in innere Bereiche des Wabenkörpers 1 vor und haftet an dem Haftmittel 14. Zur Ausbildung von fügetechnischen Verbindungen wird der Wabenkörper 1 in einen Ofen 28 befördert und dabei bei Temperaturen oberhalb 1000° C und im Vakuum thermisch behandelt.

Bezugszeichenliste

| | |
|---|---|
| 1 | Wabenkörper |
| 2 | Strukturierte Blechfolie |
| 3 | Glatte Blechfolie |
| 4 | Gehäuse |
| 5 | Höhe |
| 6 | Breite |
| 7 | Zweite Länge |
| 8 | Erste Länge |
| 9 | Stapel |
| 10 | Kanal |
| 11 | Achse |
| 12 | Flankensteigung |
| 13 | Stirnseite |
| 14 | Haftmittel |
| 15 | Kontaktstelle |
| 16 | Lotmittel |
| 17 | Ende |
| 18 | Trägerschicht |
| 19 | Katalysator |
| 20 | Verstärkungsstrulctur |
| 21 | Vorspannung |
| 22 | Dicke |
| 23 | Wickelpunlct |
| 24 | Werkzeug |
| 25 | Verteiler |
| 26 | Reservoir |
| 27 | Wirbelbett |
| 28 | Ofen |
| 29 | Vorsprung |
| 30 | Durchmesser |

Patentansprüche

1. Verfahren zur Herstellung eines metallischen Wabenkörpers (1), der eine Mehrzahl von glatten Blechfolien (3) und zumindest teilweise strukturierten Blechfolien (2) aufweist und in einem Gehäuse (4) angeordnet ist, wobei die glatten Blechfolien (3) eine erste Länge (8) und die strukturierten Blechfolien (2) eine zweite Länge (7) haben, **dadurch gekennzeichnet, dass** eine Differenz der ersten Länge (8) und der zweiten Länge (7) in Abhängigkeit einer Vorspannung (21) gewählt wird, in dem:

- ein Querschnitt des Gehäuses (4), der durch dessen Innenmantelfläche begrenzt ist, bestimmt wird, und
- ein einer vorbestimmten Vorspannung (21) entsprechender Flächenüberschuss eines Querschnitts einer äußeren Form eines in das Gehäuse (4) einzuführenden Stapels (7) von Blechfolien (2,3) vorgesehen ist, wobei die äußere Form, die mit Blechfolien (2, 3) gebildet wird, im Wesentlichen der Gestalt des Gehäuses (7) entspricht und einen Flächenüberschuss bevorzugt im Bereich von 2% bis 8% aufweist.

2. Verfahren nach Anspruch 1, bei dem bei der Bestimmung der Differenz der ersten Länge (8) und der zweiten Länge (7) zumindest einer der folgenden Parameter berücksichtigt wird:

- Dicke (22) der Blechfolien (2,3);
- Material der Blechfolien (2,3);
- Höhe (5) der strukturierten Blechfolien (2);
- Flankensteigung (12) der strukturierten Blechfolien (2);
- Breite (6) der Struktur der strukturierten Blechfolien (2);
- Verhältnis von Breite (6) und Höhe (5) der Struktur der strukturierten Blechfolien (2);
- Zelldichte;
- Oberflächenreibwerte der Blechfolien (2,3);
- Durchmesser (30) des Wabenkörpers (1).

3. Verfahren nach Anspruch 1 oder 2, bei dem der Bestimmung der Differenz der ersten Länge (8) und der zweiten Länge (7) ein Korrekturwert berücksichtigt wird.

4. Verfahren nach einem der vorhergehenden Ansprüche, bei dem die Differenz ($\Delta$1) der ersten Länge (8) und der zweiten Länge (7) nach folgender Formel bestimmt wird:

$$\Delta l = \frac{Z_H}{Z_G}\left[\frac{m_1 l_0}{p}\left(h_0 - m_3\sigma_v\right) + b_1\right] + \frac{Z_W}{Z_G}\left[\frac{m_2 l_0}{p}\left(h_0 - m_2\sigma_v\right) + b_2\right]$$

wobei

$Z_H$ = Anteil "harter" Zellverbindungen
$Z_W$ = Anteil "weicher" Zellverbindungen
$Z_G$ = Gesamtzellzahl
$l_0$ = Paketlänge (entspannt) in mm
$h_0$ = Pakethöhe (entspannt) in mm
$p$ = Pitch in mm
$\sigma_v$ = Vorspannung
$m_i \sigma_v$ = Wellhöheverringerung aufgrund der Vorspannung ist.

5. Verfahren nach einem der vorhergehenden Ansprüche, bei dem weiterhin auch der Aufbau des Wabenkörpers (1) berücksichtigt wird, insbesondere wenigstens eine der folgenden Kennwerte: Wickeltyp, Gehäusequerschnitt, Zellgeometrie.

6. Verfahren nach einem der vorhergehenden Ansprüche, welches zumindest folgende Schritte umfasst:

- Bestimmung der Differenz der ersten Länge (8) und der zweiten Länge (7);
- Auswahl von glatten Blechfolien (3) mit der ersten Länge (8) und von zumindest teilweise strukturierten Blechfolien (2) mit der zweiten Länge (7);
- Stapeln von glatten Blechfolien (3) und strukturierten Blechfolien (2) in abwechselnder Weise zu mindestens einem Stapel (9);

- Winden und/oder Wickeln des mindestens einen Stapels (9);
- Einbringen des mindestens einen Stapels (9) mit einer Vorspannung (21) in ein Gehäuse (4), so dass alle Enden (17) der glatten und strukturierten Blechfolien (3,2) mit dem Gehäuse (4) in Kontakt sind.

**7.** Verfahren nach Anspruch 6, bei dem der mindestens eine Stapel (9) S-förmig, V-förmig und/oder U-förmig gebogen wird.

**8.** Verfahren nach Anspruch 6 oder 7, bei dem mehrere Stapel (9) in das Gehäuse (4) eingebracht werden.

**9.** Verfahren nach einem der Ansprüche 6 bis 8, bei dem über eine Stirnseite (13) des Wabenkörpers (1) ein Haftmittel (14) aufgebracht wird, welches sich infolge eines Kapillareffektes entlang von Kontaktstellen (15) der Blechfolien (2,3) miteinander sowie mit dem Gehäuse (4) verteilt.

**10.** Verfahren nach einem der Ansprüche 6 bis 9, bei dem über eine Stirnseite (13) des Wabenkörpers (1) ein Lotmittel (16) aufgebracht und der Wabenkörper (1) bei Temperaturen von 1000°C bis 1300°C und/oder unter Vakuum verlötet wird.

**11.** Verfahren nach einem der Ansprüche 6 bis 10, bei dem die Blechfolien (2,3) mit einer Trägerschicht (18) versehen werden, welche mit einem katalytisch aktiven Material (19) imprägniert und anschließend kalziniert wird.

**Claims**

**1.** A process for producing a metallic honeycomb body (1), which comprises a plurality of smooth sheet metal foils (3) and at least partially structured sheet metal foils (2) and is arranged in a housing (4), the smooth sheet metal foils (3) having a first length (8), and the structured sheet metal foils (2) having a second length (7), **characterized in that** a difference is selected between the first length (8) and the second length (7) as a function of pre- stress (21), wherein

- a cross section of the housing (4) is being defined, in which the cross section is delimited by the inner lateral surface of the housing (4), and
- an excess surface area of a cross section of a stack (7) of sheet metal foils (2, 3), wherein the stack (7) is to be inserted into the housing (4), is a characteristic value representing a measure of predetermined pre-stress (21), wherein the outer form which is formed by the metal foils (2, 3) corresponds to the form of the housing (7) and has an excess area preferably in a range from 2 to 8 %.

**2.** The process as claimed in claim 1, in which at least one of the following parameters is taken into account when determining the difference between the first length (8) and the second length (7):

- thickness (22) of the sheet-metal foils (2, 3);
- material of the sheet-metal foils (2, 3);
- height (5) of the structured sheet-metal foils (2);
- flank inclination (12) of the structured sheet-metal foils (2);
- width (6) of the structure of the structured sheet-metal foils (2);
- ratio of width (6) and height (5) of the structure of the structured sheet-metal foils (2);
- cell density;
- surface friction coefficients of the sheet-metal foils (2, 3);
- diameter (30) of the honeycomb body (1).

**3.** The process as claimed in claim 1 or 2, in which a correction value is taken into account when determining the difference between the first length (8) and the second length (7).

**4.** The process as claimed in one of the preceding claims, in which the difference ($\Delta 1$) between the first length (8) and the second length (7) is determined in accordance with the following formula:

$$\Delta 1 = \frac{Z_H}{Z_G} \left[ \frac{m_1 l_0}{p} (h_0 - m_3 \sigma_v) + b_1 \right] + \frac{Z_W}{Z_G} \left[ \frac{m_2 l_0}{p} (h_0 - m_2 \sigma_v) + b_2 \right]$$

where

$Z_H$ = proportion of "hard" cell connections
$Z_W$ = proportion of "soft" cell connections
$Z_G$ = total number of cells
$l_0$ = packet length (unstressed) in mm
$h_0$ = packet height (unstressed) in mm
$p$ = pitch in mm
$\sigma_v$ = prestress
$m_i \sigma_v$ = reduction in corrugation height caused by the prestress.

5. The process as claimed in one of the preceding claims, in which furthermore, the structure of the honeycomb body (1), in particular at least one of the following characteristic values: type of winding, housing cross section, cell geometry, is also taken into account.

6. The process as claimed in one of the preceding claims, which comprises at least the following steps:

   - determining the difference between the first length (8) and the second length (7);
   - selecting smooth sheet-metal foils (3) having the first length (8) and at least partially structured sheet-metal foils (2) having the second length (7);
   - stacking smooth sheet-metal foils (3) and structured sheet-metal foils (2) in an alternating manner to form at least one stack (9);
   - winding and/or intertwining the at least one stack (9);
   - introducing the at least one stack (9) with a pre-stress (21) into a housing (4), so that all the ends (17) of the smooth and structured sheet-metal foils (3, 2) are in contact with the housing (4).

7. The process as claimed in claim 6, in which the at least one stack (9) is bent in an S shape, V shape and/or U shape.

8. The process as claimed in claim 6 or 7, in which a plurality of stacks (9) are introduced into the housing (4).

9. The process as claimed in one of claims 6 to 8, in which a bonding agent (14) is applied over an end side (13) of the honeycomb body (1), which bonding agent (14), on account of a capillary effect, is distributed along contact locations (15) between the individual sheet-metal foils (2, 3) and between the sheet-metal foils (2, 3) and the housing (4).

10. The process as claimed in one of claims 6 to 9, in which a solder (16) is applied via an end side (13) of the honeycomb body (1), and the honeycomb body (1) is brazed at temperatures of from 1000°C to 1300°C and/or in vacuum.

11. The process as claimed in one of claims 6 to 10, in which the sheet-metal foils (2, 3) are provided with a support layer (18) which is impregnated with a catalytically active material (19) and then calcined.

**Revendications**

1. Procédé destiné à la fabrication d'un corps en nids d'abeilles métallique (1) qui a une pluralité de feuilles de tôle lisses (3) et de feuilles de tôle au moins partiellement structurées (2) et qui est agencé dans un boîtier (4), les feuilles de tôle lisses (3) ayant une première longueur (8) et les feuilles de tôle structurées (2) ayant une deuxième longueur (7), **caractérisé en ce qu'**une différence entre la première longueur (8) et la deuxième longueur (7) est choisie en fonction d'une précontrainte (21), dans quel cas :

   - une section transversale du boîtier (4) est déterminée, laquelle section transversale est limitée par la surface d'enveloppe intérieure du boîtier (4) et

- un excédant de surface d'une section transversale d'une forme extérieure d'une pile (7) de feuilles de tôle (2, 3) devant être introduite dans le boîtier (4), lequel excédant de surface correspondant à une précontrainte prédéterminée, la forme extérieure formée par des feuilles de tôle (2, 3) ayant sensiblement la configuration du boîtier (7) et ayant un excédant de surface de préférence dans la gamme de 2 % à 8 %.

**2.** Procédé selon la revendication 1, dans lequel on tient compte d'au moins un des paramètres suivants quand la différence entre la première longueur (8) et la deuxième longueur (7) est déterminée :

- épaisseur (22) des feuilles de tôle (2,3) ;
- matériau des feuilles de tôle (2,3) ;
- hauteur (5) des feuilles de tôle structurées (2) ;
- inclinaison des flancs (12) des feuilles de tôle structurées (2) ;
- largeur (6) de la structure des feuilles de tôle structurées (2) ;
- rapport entre largeur (6) et hauteur (5) de la structure des feuilles de tôle structurées (2)
- densité cellulaire ;
- coefficients de frottement de surface des feuilles de tôle (2,3) ;
- diamètre (30) du corps en nids d'abeilles (1).

**3.** Procédé selon la revendication 1 ou 2, dans lequel on tient compte d'une valeur de correction quand la différence entre la première longueur (8) et la deuxième longueur (7) est déterminée.

**4.** Procédé selon l'une des revendications précédentes, dans le cas duquel la différence ($\Delta 1$) entre la première longueur (8) et la deuxième longueur (7) est déterminée selon la formule suivante :

$$\Delta 1 = \frac{Z_H}{Z_G}\left[\frac{m_1 l_0}{p}(h_0 - m_3\sigma_v) + b_1\right] + \frac{Z_W}{Z_G}\left[\frac{m_2 l_0}{p}(h_0 - m_2\sigma_v) + b_2\right],$$

$Z_H$ étant = part de connections de cellules "dures"
$Z_W$ = part de connections de cellules "molles"
$Z_G$ = nombre total de cellules
$l_0$ = longueur de paquet (détendue) en mm
$h_0$ = hauteur de paquet (détendue) en mm
$p$ = pitch en mm
$\sigma_v$ = précontrainte
$m_i \sigma_v$ = réduction de la hauteur d'ondulation à cause de la précontrainte.

**5.** Procédé selon l'une des revendications précédentes, dans lequel on tient compte en outre de la structure du corps en nids d'abeilles (1), notamment d'au moins un des paramètres caractéristiques suivants : le type d'enroulement, la section transversale du boîtier, la géométrie des cellules.

**6.** Procédé selon l'une des revendications précédentes, qui comporte au moins les étapes suivantes :

- déterminer la différence entre la première longueur (8) et la deuxième longueur (7) ;
- choix de feuilles de tôle lisses (3) avec la première longueur (8) et de feuilles de tôle au moins partiellement structurées (2) avec la deuxième longueur (7) ;
- empiler en alternance des feuilles de tôle lisses (3) et des feuilles de tôle structurées (2) en au moins une pile (9) ;
- embobiner et/ou enrouler l'au moins une pile (9) ;
- introduire l'au moins une pile (9) avec une précontrainte (21) dans un boîtier (4), de sorte que toutes les extrémités (17) des feuilles de tôle lisses et structurées (3, 2) soient en contact avec le boîtier (4).

**7.** Procédé selon la revendication 6, dans lequel l'au moins une pile (9) est cintrée en forme de S, de V et/ou en forme de U.

**8.** Procédé selon la revendication 6 ou 7, dans lequel une pluralité de piles (9) est introduite dans le boîtier (4).

**9.** Procédé selon l'une des revendications 6 à 8, dans lequel un agent adhésif (14) est appliqué à l'intermédiaire d'une face frontale (13) du corps en nids d'abeilles (1), lequel agent adhésif est réparti le long de positions de contact (15) des feuilles de tôle (2, 3) entre elles ainsi qu'avec le boîtier (4) dû à l'effet capillaire.

**10.** Procédé selon l'une des revendications 6 à 9, dans le cas duquel un agent de brasure (16) est rapporté à l'intermédiaire d'une face frontale 13 du corps en nids d'abeilles (1) et le corps en nids d'abeilles (1) est brasé sous vide et/ou pas sous vide à des températures de 1000°C à 1300°C.

**11.** Procédé selon l'une des revendications 6 à 10, dans le cas duquel les feuilles de tôle (2, 3) sont pourvues d'une couche de support (18) laquelle est imprégnée d'un matériau à activité catalytique (19) et est calcinée ensuite.

FIG 1

FIG 2

FIG 3

FIG 4

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0245737 B1